# EUROPÄISCHE PATENTANMELDUNG

(11) **EP 4 841 329 A1**
(43) Veröffentlichungstag der Anmeldung: **18.11.2026**
(21) Anmeldenummer: 25175595.5
(22) Anmeldetag: 12.05.2025
(51) Int. Cl.: G02B 26/10, G02B 26/12

(54) **VERFAHREN ZUM BETREIBEN EINER OPTOMECHANISCHEN ABLENKVORRICHTUNG UND OPTOMECHANISCHE ABLENKVORRICHTUNG**

(71) Anmelder: SICK AG, 79183 Waldkirch (DE)
(72) Erfinder: Klinke, Hannes, 23847 Meddewade (DE)
(74) Vertreter: Manitz Finsterwald Patent- und Rechtsanwaltspartnerschaft mbB

(57) **Zusammenfassung**

Die vorliegende Erfindung betrifft ein Verfahren zum Betreiben einer optomechanischen Ablenkvorrichtung, welche zum periodischen Ablenken eines Sendelichtbündels zur Erzeugung eines Abtastmusters eingerichtet ist und ein rotatorisch versetzbares Umlenkelement umfasst, wobei das Umlenkelement von einer Antriebseinheit angetrieben wird, wobei die Antriebseinheit und das Umlenkelement ein dynamisches System bilden, dessen dynamische Eigenschaften durch zumindest einen Kinetikparameter charakterisiert sind. Erfindungsgemäß wird die Ablenkvorrichtung wahlweise in einer Regelbetriebsart oder in einer Charakterisierungsbetriebsart betrieben, wobei in der Regelbetriebsart die Antriebseinheit auf der Grundlage eines vorgegebenen kinetischen Sollbewegungsablaufs und des zumindest einen Kinetikparameters betrieben wird, wobei die Antriebseinheit in der Charakterisierungsbetriebsart auf der Grundlage eines von dem Sollbewegungsablauf abweichenden Charakterisierungsbewegungsablaufs betrieben wird und fortlaufend Messwerte für zumindest ein Bewegungscharakteristikum des Umlenkelements erfasst werden, wobei auf der Grundlage dieser erfassten Messwerte der zumindest eine Kinetikparameter ermittelt wird. Die Erfindung betrifft in einem weiteren Aspekt eine entsprechende optomechanische Ablenkvorrichtung.

## Beschreibung

Die vorliegende Erfindung betrifft ein Verfahren zum Betreiben einer optomechanischen Ablenkvorrichtung, welche zum periodischen Ablenken eines Sendelichtbündels zur Erzeugung eines Abtastmusters eingerichtet ist und ein rotatorisch versetzbares Umlenkelement umfasst, wobei das Umlenkelement von einer Antriebseinheit angetrieben wird, wobei die Antriebseinheit und das Umlenkelement ein dynamisches System bilden, dessen dynamische Eigenschaften durch zumindest einen Kinetikparameter charakterisiert sind.

Derartige optomechanische Ablenkvorrichtungen werden zu verschiedenen Zwecken eingesetzt. Beispielhaft werden hier Laserscanner genannt, bei denen das Sendelichtbündel periodisch in einen Überwachungsbereich ausgesandt und von gegebenenfalls im Überwachungsbereich vorhandenen Objekten remittiert wird. Die remittierten Lichtsignale können mittels eines optoelektronischen Sensors erfasst werden, wobei eine ortsaufgelöste Erfassung von anwesenden Objekten unter Kenntnis der jeweiligen Ausbreitungsrichtung des Sendelichtbündels erfolgen kann. Ein weiteres Anwendungsgebiet von optomechanischen Ablenkvorrichtungen sind Laserprojektoren, welche in schneller Folge erzeugte Abtastmuster auf eine Projektionsfläche lenken und dadurch eine großflächige Wiedergabe von Lichtmustern oder von Stand- oder Bewegtbildern ermöglichen. Derartige Projektoren werden auch als Beamer bezeichnet.

Bekannte optomechanische Ablenkvorrichtungen arbeiten gemäß zwei unterschiedlichen Funktionsprinzipien. Zum einen kann das rotatorisch versetzbare Umlenkelement eine Drehbewegung mit gleichbleibendem Drehsinn ausführen, wobei das Umlenkelement beispielsweise als Spiegelrad, insbesondere als Polygonspiegelrad, ausgestaltet ist. Zum anderen kann das rotatorisch versetzbare Umlenkelement eine Schwenkbewegung mit einem periodisch wechselnden Drehsinn ausführen. Das Umlenkelement kann bei dieser Ausführungsform als Schwingspiegel ausgestaltet sein.

Bei beiden Funktionsprinzipien bilden die Antriebseinheit, die beispielsweise einen Elektromotor oder eine Drehspule umfassen kann, und das mit der Antriebseinheit gekoppelte Umlenkelement ein dynamisches, insbesondere schwingfähiges System. Die Schwingungen dieses dynamischen Systems können in unterschiedlicher Weise auftreten oder angeregt werden. Es kann insbesondere ein lineares oder nichtlineares Schwingverhalten vorliegen. Das Schwingverhalten kann nicht nur durch die Antriebseinheit beeinflusst werden, sondern auch durch von außen auf die Ablenkvorrichtung einwirkende Schwingungen oder sonstige mechanische Anregungen wie Stöße oder Vibrationen.

Für die meisten Anwendungen von optomechanischen Ablenkvorrichtungen ist eine möglichst präzise Ablenkung des Sendelichtbündels erforderlich, d.h. das von dem Sendelichtbündel erzeugte Abtastmuster soll sowohl in zeitlicher als auch in räumlicher Hinsicht möglichst wenig von einem idealen vorgegebenen Abtastmuster abweichen. Mit anderen Worten soll ein von dem Sendelichtbündel auf einer (gedachten) Projektionsfläche erzeugter Sendelichtfleck möglichst genau einer vorgegebenen "Strahltrajektorie" folgen. Aufgrund unerwünschter dynamischer Effekte kann der Sendelichtfleck unter Umständen von dieser idealisierten "Strahltrajektorie" abweichen, was zu Fehlern bei der Erzeugung des Abtastmusters führen kann.

Grundsätzlich hängt das dynamische Verhalten dieses Systems von der (Winkel-)Geschwindigkeit und insbesondere auch von positiven oder negativen (Winkel-)Beschleunigungen des Umlenkelements ab. Durch eine Verringerung der Geschwindigkeit bzw. der Beschleunigung kann zwar eine Reduktion von unerwünschten Schwingungen erzielt werden, so dass eine genauere Positionierung des Umlenkelements möglich ist. Bei vielen Anwendungen ist eine solche Verringerung der Geschwindigkeit oder Beschleunigung jedoch nicht möglich oder nicht erwünscht. Ferner ist auch eine Reduzierung von Schwingungen mittels mechanischer oder elektrodynamischer Dämpfungsglieder möglich. Auch durch eine geeignete Ansteuerung der Antriebseinheit, bei der insbesondere ruckartige Bewegungen vermieden werden, kann das Schwingungsverhalten positiv beeinflusst werden.

Weiterhin lässt sich das dynamische Verhalten des Systems auch auf der Grundlage von theoretischen physikalischen Größen mathematisch beschreiben. Sofern diese physikalischen Größen bekannt sind, kann ein mathematisches Modell aufgestellt werden, welches in eine Regeleinheit für die Antriebseinheit integriert wird. Mit Hilfe einer derartigen Regelung kann ein unerwünschtes dynamisches Verhalten des Systems innerhalb bestimmter Grenzen kompensiert werden.

Eine Schwierigkeit besteht jedoch darin, die für die Aufstellung des Modells erforderlichen theoretischen physikalischen Größen oder Parameter möglichst exakt und vollständig zu bestimmen. Beispielsweise wird das dynamische Verhalten durch die beweglichen Massen und der daraus resultierenden Trägheitsmomente, aber auch durch jeweilige Biege- und/oder Torsionssteifigkeiten der Komponenten beeinflusst. Auch das elektrodynamische Verhalten der Antriebseinheit kann das Schwingungsverhalten beeinflussen. Zudem können von außen auf die Ablenkeinrichtung einwirkende Kräfte, die beispielsweise durch Vibrationen oder Stöße oder durch ein Klopfen, ein Drehen oder ein Schieben verursacht werden, dem aus Antriebseinheit und Umlenkelement gebildeten dynamischen System weitere Schwingungen oder Wellen aufprägen. Diese überlagerten Wellen beeinträchtigen die Genauigkeit der Lichtablenkung und können unter Umständen zu einer Materialermüdung führen oder einen unnötig hohen Energieeinsatz verursachen, wenn sie nicht in adäquater Weise bei der Auslegung der Regelung berücksichtigt werden.

Neben einer Schwingungsanregung des Gesamtsystems können auch einzelne Elemente von Schwingungen betroffen sein. So können bei entsprechender Anregung, insbesondere bei der Verwendung von großflächigen Spiegeln als Umlenkelement, Biegeschwingungen auftreten, welche zu Wölbungen der Spiegeloberfläche führen, die die optischen Eigenschaften der Spiegeloberfläche nachteilig beeinflussen können. Mit Hilfe mechanischer Maßnahmen wie einer Versteifung der Komponenten können solche Effekte nur begrenzt kompensiert werden, da sie in der Regel mit einer Erhöhung der bewegten Masse einhergehen und dazu führen, dass das dynamische Verhalten des Gesamtsystems träger wird und sich der Energiebedarf für die Antriebseinheit erhöht.

Eine weitere Problematik bei der Auslegung einer solchen Regelung besteht darin, dass aufgrund von Fertigungstoleranzen oder abweichenden Materialeigenschaften die dynamischen Eigenschaften des realen Systems oftmals von den idealen, theoretisch ermittelten Eigenschaften abweichen.

Zudem kann der Einfluss von Alterungseffekten, Temperaturänderungen oder baulichen Modifikationen nur unzureichend berücksichtigt werden. Grundsätzlich werden mit fortschreitender Betriebsdauer die (direkt oder nur indirekt messbaren) Systemgrößen und -zustände, welche die dynamischen Eigenschaften des realen Systems beeinflussen, zunehmend unbestimmter, wodurch die Regelungs- oder Steuerungsgüte potentiell abnimmt.

Aus US 2007/0278311 A1 ist eine Lichtabtasteinrichtung und ein entsprechendes Verfahren beschrieben, bei dem die Position eines Abtastspiegels mit Hilfe einer Rückkopplungsspule überwacht wird. Das Rückkopplungssignal wird nur dann ausgelesen, wenn sich der Antrieb des Ablenkspiegels in einer Ruheperiode befindet. Dadurch sollen durch die Steuerspannung für den Antrieb erzeugte elektromagnetische Übersprecheffekte, die zu Fehlmessungen des Positionssignals führen, ausgeschlossen werden.

Es ist die Aufgabe der Erfindung, ein Verfahren zum Betreiben einer optomechanischen Ablenkvorrichtung anzugeben, welches eine verbesserte Ansteuerung des Umlenkelements ermöglicht.

Die Lösung der Aufgabe erfolgt durch ein Verfahren mit den Merkmalen des Anspruchs 1. Erfindungsgemäß wird die Ablenkvorrichtung wahlweise in einer Regelbetriebsart oder in einer Charakterisierungsbetriebsart betrieben, wobei in der Regelbetriebsart die Antriebseinheit auf der Grundlage eines vorgegebenen kinetischen Sollbewegungsablaufs und des zumindest einen Kinetikparameters betrieben wird, wobei die Antriebseinheit in der Charakterisierungsbetriebsart auf der Grundlage eines von dem Sollbewegungsablauf abweichenden Charakterisierungsbewegungsablaufs betrieben wird und fortlaufend Messwerte für zumindest ein Bewegungscharakteristikum des Umlenkelements erfasst werden, wobei auf der Grundlage dieser erfassten Messwerte der zumindest eine Kinetikparameter ermittelt wird.

Der oder die Kinetikparameter dienen insbesondere der Charakterisierung eines Schwingungsverhaltens des aus der Antriebseinheit und dem Umlenkelement gebildeten dynamischen Systems und können einem jeweiligen physikalischen Systemparameter wie einer Federkraft, einem Trägheitsmoment, einem Federmoment bzw. Direktionsmoment, einer Resonanzfrequenz, einem Reibungskoeffizienten, einer Motorstrom-Drehmoment-Proportionalitätskonstante, einem magnetischen Sättigungsfluss oder -strom, einer Steifigkeits-Materialkonstante (z.B. ein Elastizitätsmodul) oder einer Gegen-EMK (EMK abgekürzt für elektromotorische Kraft) der Antriebseinheit entsprechen oder auch durch eine Kombination aus zwei oder mehr dieser physikalischen Systemparameter bestimmt sein. Der oder die Kinetikparameter müssen nicht zwingend statisch sein, sondern können insbesondere bei komplexeren Systemen auch durch eine Funktion über einen oder mehrere weitere Parameter, wie z.B. der Geschwindigkeit, der Temperatur oder einer Betriebsfrequenz definiert sein.

Das Betreiben der Antriebseinheit kann beispielsweise das Einstellen einer Betriebsspannung und/oder eines Betriebsstroms umfassen. Bei Drehfeldmaschinen kann das Betreiben auch ein Einstellen oder Steuern der Phasenlage der Motorströme bzw. von vektoriellen Zeigergrößen des Magnetfelds umfassen. Der vorgegebene kinetische Sollbewegungsablauf und der zumindest eine Kinetikparameter können hierfür in einer geeigneten Steuereinheit gespeichert und abgerufen werden.

Der in der Regelbetriebsart verwendete Sollbewegungsablauf definiert insbesondere den Bewegungsablauf des Umlenkelements für eine Nutzphase des Abtastmusters, in der zum Beispiel in einer übergeordneten Anwendung der Ablenkvorrichtung eine dezidierte oder aktive Nutzung des abgelenkten Sendelichtbündels vorgesehen ist. Das Betreiben der Ablenkeinrichtung auf der Grundlage des vorgegebenen kinetischen Sollbewegungsablaufs und des zumindest einen Kinetikparameters umfasst insbesondere eine Regelung, bei welcher eine Modellierung des dynamischen Verhaltens der Ablenkeinrichtung auf der Grundlage des oder der Kinetikparameter vorgesehen ist.

Bei dem genannten Charakterisierungsbewegungsablauf handelt es sich insbesondere um einen Bewegungsablauf, welcher eine Charakterisierung des dynamischen Verhaltens des aus der Antriebseinheit und dem Umlenkelement gebildeten dynamischen Systems ermöglicht. In der Charakterisierungsbetriebsart wird das dynamische System demnach dezidiert zu einem dynamischen Verhalten angeregt, welches von der Regelbetriebsart abweicht, um eine hierdurch erzeugte Systemantwort auszuwerten. Hierdurch kann eine Charakterisierung des Systems durchgeführt werden, die erheblich genauer ist als eine idealisierte, beispielsweise auf Konstruktionsdaten basierenden Charakterisierung. Bei einem Umlenkelement mit periodisch wechselndem Drehsinn (Schwingspiegel) kann eine Anregung des Systems beispielsweise dadurch erfolgen, dass im Unterschied zu einer relativ sanften Umkehrung der Drehrichtung mit vergleichsweise geringen Beschleunigungen oder Beschleunigungsänderungen die Umkehrbewegung ruckartig erfolgt. Bei einer Ablenkvorrichtung, bei der das Umlenkelement mit gleichbleibendem Drehsinn rotiert wird (z.B. bei einem Spiegelrad) kann in der Charakterisierungsbetriebsart der in der Regelbetriebsart gleichmäßigen Rotation kurzzeitig ein "Ruck" überlagert werden, d.h. die Rotationsgeschwindigkeit wird kurzzeitig erhöht oder vermindert, wobei dies vorzugsweise mit einer vergleichsweise hohen Änderungsrate erfolgt.

Die dynamische Anregung wird insbesondere außerhalb einer Nutzphase des Abtastmusters durchgeführt, d.h. zu Zeiten, in denen in einer übergeordneten Anwendung der Ablenkvorrichtung keine dezidierte oder aktive Nutzung des abgelenkten Sendelichtbündels erfolgt.

Um in der Charakterisierungsbetriebsart eine präzise Ermittlung oder Abschätzung des zumindest einen Kinetikparameters zu ermöglichen, werden fortlaufend Messwerte für zumindest ein Bewegungscharakteristikum erhoben. Dies kann durch eine Erzeugung einer Messwertreihe erfolgen, beispielsweise durch eine Abtastung eines durch einen geeigneten Sensor ermittelten Messsignals. Beispiele für solche Bewegungscharakteristika werden weiter unten angegeben.

Auf der Grundlage des während des Betriebs in der Charakterisierungsbetriebsart ermittelten Kinetikparameters kann in einem Folgeschritt zumindest ein physikalischer Systemparameter des dynamischen Systems ermittelt oder zumindest abgeschätzt werden, wobei der physikalische Systemparameter beispielsweise eine Federkraft, ein Trägheitsmoment, ein Reibungskoeffizient, eine Resonanzfrequenz oder eine Masse umfasst. Dies kann insbesondere dann erfolgen, wenn der ermittelte Kinetikparameter von mehreren physikalischen Systemparametern abhängt. Hierfür kann wiederum eine Modellierung zugrunde gelegt werden.

Das Ermitteln des Kinetikparameters umfasst insbesondere auch ein Anpassen oder Ändern eines zu einem früheren Zeitpunkt ermittelten und gespeicherten Kinetikparameters.

Mithilfe des erfindungsgemäßen Verfahrens kann insbesondere eine Beschädigung oder Zerstörung der Ablenkvorrichtung aufgrund von Resonanzkatastrophen verhindert werden. Der Ressourcen- und Energieeinsatz kann minimiert werden. Die Genauigkeit der Lichtbündelablenkung kann optimiert werden. Die Ablenkvorrichtung kann mit hoher Dynamik, d.h. mit hohen Drehzahlen bzw. Schwingfrequenzen des Umlenkelements, betrieben werden.

Der oder die Kinetikparameter müssen nicht zwingend direkt messbar sein, sondern können auch indirekt durch Modellannahmen analytisch errechnet oder mit Hilfe von Näherungsverfahren bestimmt werden. Dabei wird das Wissen um den Systemaufbau und die physikalischen Zusammenhänge des dynamischen Systems genutzt, um mittels eines Modells mit bekannten Eingangs- und Ausgangsgrößen das dynamische Verhalten so anzunähern, dass tatsächlich gemessene Charakterisierungssignale (näherungsweise) von dem Modell nachgebildet werden können. Es gilt dann die Annahme, dass die gefundenen oder abgeschätzten Kinetikparameter den realen physikalischen Systemparametern entsprechen.

Die Kinetikparameter müssen nicht zwingend und nicht ausschließlich durch kinetische Größen bestimmt sein. Ebenso sind weitere messbare Größen wie z.B. eine Stromaufnahme der Antriebseinheit, Spannungswerte an den Motorphasen oder die Phasenlage von Motorströmen geeignet, um die Systemgrößen zu bestimmen.

Das Schwingungsverhalten des dynamischen Systems muss nicht zwangsläufig einen periodischen Charakter haben. Einzelne Anregungen können im aperiodischen Grenzfall auch eine temporäre Verformung, Verwindung, Verdrehung oder Versetzung einzelner Elemente zur Folge haben, welche ohne messbares Über- oder Nachschwingen wieder in ihren ursprünglichen Zustand bzw. in ihre ursprüngliche Position zurückkehren.

Das erfindungsgemäße Verfahren ist grundsätzlich nicht auf schwingfähige Systeme beschränkt. Bei steifen Kopplungen, z.B. bei spielfreien Getrieben mit starken Motoren und hoher Motoruntersetzung, kann das Schwingungsverhalten je nach Anwendung vernachlässigt werden. Dennoch können hier Parameter wie z.B. Trägheitsmomente ermittelt werden, z.B. indem ein vorgegebener Motorstrom mit der tatsächlich erreichten Beschleunigung verglichen wird.

Wie erwähnt können unter Umständen die gesuchten Kinetikparameter bzw. Systemgrößen nicht mit klassischen Methoden ermittelt werden. Dies kann z.B. bei unterbestimmten Systemen, bei stark verrauschten Messgrößen, bei unzureichender Kenntnis der Wirkungsketten im System oder mangels eines adäquaten Modells der Fall sein. Insbesondere in diesen Fällen können KI-Methoden (künstliche Intelligenz) angewendet werden, um ggf. auf der Grundlage von Trainingsdaten, die aus charakteristischen, anwendungsspezifischen Mustern in den Trajektorien gewonnen werden können, zusätzliches Systemwissen zu generieren. Unter Nutzung dieses KI-basierten Zusatzwissens können dann mit einer gewissen Wahrscheinlichkeit Vorhersagen getroffen werden. Bekanntermaßen liefern KI-basierte Methoden in der Regel nur dann zuverlässige Ergebnisse, wenn die Trainingsdaten alle später auftretenden Anwendungsfälle ausreichend abbilden und eindeutige Charakteristika aufweisen, welche systematisch von der KI erkannt werden können. Bei Änderungen der Bewegungsmuster oder an einzelnen Komponenten (Form, Masse, Trägheitsmoment, Material, etc.), aber auch an der Umgebung (Vibrationen, Stöße, Temperatur, Luftdruck) kann daher ein erneutes Training erforderlich werden.

Gemäß einer bevorzugten Ausgestaltung des Verfahrens ist das zumindest eine Bewegungscharakteristikum aus einer Gruppe ausgewählt, welche die Position, die Geschwindigkeit, die Beschleunigung oder den Ruck der Rotationsbewegung des Umlenkelements umfasst. Das genannte kinetische Bewegungscharakteristikum der Rotationsbewegung ist somit im engeren Sinne eine Winkelgeschwindigkeit (bzw. eine Drehzahl), eine Winkelbeschleunigung oder ein Winkelruck des Umlenkelements, wobei unter einem Winkelruck ein Ruck der Drehbewegung und somit eine erste (mathematische) Ableitung der Winkelbeschleunigung verstanden wird. Das Bewegungscharakteristikum kann beispielsweise mittels eines externen Sensors, z.B. eines optischen, kapazitiven oder magnetfeldbasierten Sensors, und/oder mittels eines internen Sensors, beispielsweise einer geeigneten Messschaltung in der Antriebseinheit, welche beispielsweise auf einer gemessenen Gegen-EMK eines Elektromotors der Antriebseinheit basiert, ermittelt werden. Es können auch mehrere solche Bewegungscharakteristika auf der Grundlage der mittels eines bestimmten Sensors ermittelten Messwerte bestimmt werden, beispielsweise durch mathematische Ableitung oder Integration der Messwerte. Alternativ können die Werte der Bewegungscharakteristika z.B. durch Näherungsverfahren unter Nutzung bekannter Zusammenhänge (Systemaufbau, Eingangs- und Ausgangsgrößen) angenähert bzw. abgeschätzt werden.

Beispielsweise kann das Verfahren mittels einer adaptiven Regelung durchgeführt werden. Diese verfügt über einen kontinuierlichen Beobachter und ggf. einen Zustandsschätzer, der die Regelparameter optimiert und dabei gegen ein Optimum konvergiert. Die Regelung kann z.B. als LQ-Regler (linear-quadratischer Regler) ausgeführt sein, dessen Rückführmatrix über die Minimierung eines quadratischen Kostenfunktionals ermittelt wird. Falls die gemessenen Parameter verrauscht sind, kann die Regelung um einen Kalman-Filter ergänzt werden, um die Regelungsqualität zu verbessern. Mittels einer adaptiven Regelung können Restfehler der ermittelten Parameter besser berücksichtigt werden. Außerdem können so interne (nicht messbare) Zustände ermittelt werden (insbesondere durch eine Zustandsregelung mit Beobachter) und optimal angenähert werden (z.B. durch eine LQ-Erweiterung oder einen Kalman-Filter).

Gemäß einer weiteren bevorzugten Ausgestaltung wird die Antriebseinheit in der Charakterisierungsbetriebsart derart betrieben, dass das Umlenkelement im Vergleich zu der Regelbetriebsart mit einer abweichenden Geschwindigkeit, einer abweichenden Beschleunigung und/oder einem abweichenden Ruck angetrieben wird. Der Charakterisierungsbewegungsablauf kann somit entsprechende Änderungen und/oder Verläufe für Sollwerte der genannten kinetischen Bewegungscharakteristika umfassen, welche die Antriebseinheit erzeugen soll. Es wird beispielsweise für die Charakterisierung eine erhöhte Drehgeschwindigkeit vorgegeben, wobei die Änderungsrate der Drehgeschwindigkeit, d.h. die Winkelbeschleunigung ebenfalls vorgegeben werden kann. Durch Auswertung der Messwerte wird dann beispielsweise die tatsächliche Winkelgeschwindigkeit und deren Änderungsrate ermittelt, wobei das Ermitteln des oder der Kinetikparameter beispielsweise auf der Grundlage einer Abweichung des oder der Bewegungscharakteristika von den vorgegebenen Sollwerten erfolgen kann. Konkret kann der Betrieb der Antriebseinheit in der Charakterisierungsbetriebsart z.B. durch entsprechende Änderungen des Betriebsstroms und/oder der Betriebsspannung für den elektromotorischen Antrieb oder durch ein Variieren des Tastverhältnisses bei einer Pulsweitenmodulation veranlasst werden.

Gemäß einer weiteren bevorzugten Ausgestaltung umfasst das Abtastmuster zumindest einen Nutzbereich, wobei die Ablenkvorrichtung nur dann in der Charakterisierungsbetriebsart betrieben wird, wenn das Umlenkelement das Sendelichtbündel in einen Bereich außerhalb des Nutzbereichs lenkt. Dies wird nachfolgend beispielhaft für eine Ablenkvorrichtung beschrieben, bei welcher das Umlenkelement ein Schwingspiegel mit periodisch wechselndem Drehsinn ist. Zur Erzeugung eines aus einer Vielzahl von untereinander angeordneten Zeilen bestehenden Abtastmusters wird der Schwingspiegel um eine erste Schwenkachse innerhalb eines relativ großen Winkelbereichs kontinuierlich hin und herbewegt. Nach erfolgter Abtastung einer jeweiligen Zeile wird der Schwingspiegel (bzw. ein zusätzlicher zweiter Schwingspiegel) um eine zweite, quer zur ersten Schwenkachse verlaufende zweite Schwenkachse um einen kleinen Winkelbetrag verstellt, um eine weitere Zeile abzutasten. Nach vollständiger Abtastung einer jeweiligen Zeile wird der Drehsinn der Schwenkbewegung um die erste Schwenkachse innerhalb kurzer Zeit umgekehrt, wobei sich diese Umkehrbewegung mit der Verstellbewegung um die zweite Schwenkachse überlagert. Ein hierbei von dem Sendelichtbündel überstrichener jeweiliger Bahnkurvenabschnitt des Abtastmusters beschreibt näherungsweise eine 180°-Kurve. Diese gebogenen Bahnkurvenabschnitte befinden sich außerhalb des Nutzbereichs, welcher auch als ROI (abgekürzt für Englisch "Region Of Interest") bezeichnet wird. Während der Umkehrbewegung des Umlenkelements kann gegebenenfalls eine Dunkeltastung des Sendelichtbündels erfolgen.

Diese kurzen Zeiträume, in denen das Sendelichtbündel jeweils Bereiche außerhalb des Nutzbereichs oder der ROI überstreicht, werden für die Durchführung des Charakterisierungsbetriebs genutzt, d.h. die Umkehrbewegung erfolgt gemäß dem vorgegebenen Charakterisierungsbewegungsablauf. Die Charakterisierungsbetriebsart wird somit in vorteilhafter Weise dann ausgeführt, wenn eine sinnvolle Nutzung des Sendelichtbündels für den Regelbetrieb ohnehin nicht möglich ist.

Gemäß einer weiteren bevorzugten Ausgestaltung wird die Ablenkvorrichtung in der Charakterisierungsbetriebsart betrieben, während sich das Umlenkelement in einer Übergangsphase befindet, wobei die Übergangsphase des Umlenkelements einem jeweiligen Winkelstellungsbereich entspricht, in welchem keine oder zumindest keine geometrisch eindeutig definierte Umlenkung des Sendelichtbündels erfolgt oder eine Umkehr der Bewegungsrichtung des Umlenkelements vorgesehen ist. Dies wird nachfolgend beispielhaft für eine weitere Ablenkvorrichtung beschrieben, bei welcher das Umlenkelement als Polygonrad ausgebildet ist. Die Übergangsphase entspricht hier einer Winkelstellung oder einem Winkelbereich bei der zwei unterschiedlich geneigte Umlenkflächen mit ihren jeweiligen Kanten aneinanderstoßen. Da sowohl dieser Grenzbereich als auch das Sendelichtbündel selbst eine bestimmte Größe aufweisen, wird beim Auftreffen des Sendelichtbündels auf den Grenzbereich ein indifferenter Sendelichtfleck im Überwachungsbereich erzeugt. Bei einer weiteren beispielhaften Ablenkvorrichtung, welche einen einfachen Drehspiegel mit nicht reflektierender Rückseite als Umlenkelement aufweist, entspricht die Übergangsphase dem Winkelstellungsbereich, in welchem das Sendelichtbündel auf die Rückseite trifft. Die Übergangsphasen, während derer die übergeordnete optoelektronische Vorrichtung ohnehin kurzzeitig nicht verfügbar ist, wird somit in vorteilhafter Weise für die Durchführung der Charakterisierungsbetriebsart genutzt.

Auch die vorstehend beschriebenen Umkehrbereiche eines Schwingspiegels können als Übergangsphase betrachtet werden. Umgekehrt wird in der Regel auch das Sendelichtbündel in einen Bereich außerhalb des Nutzbereichs gelenkt, wenn sich das Umlenkelement in einer Übergangsphase befindet. Hier kann wiederum eine Dunkeltastung des Sendelichtbündels erfolgen.

Gemäß einer weiteren bevorzugten Ausgestaltung wird die Ablenkvorrichtung periodisch in der Charakterisierungsbetriebsart betrieben. Eine zugehörige Periodendauer kann beispielsweise durch den Sollbewegungsablauf in der Regelbetriebsart vorgegeben sein. Die Periodendauer kann beispielsweise dem Zeitabstand zwischen zwei aufeinanderfolgenden Ablenkungen des Sendelichtbündels in Bereiche außerhalb des Nutzbereichs oder dem Zeitabstand zwischen zwei aufeinanderfolgenden Übergangsphasen entsprechen. Grundsätzlich kann die Periodendauer auch einem ganzzahligen Vielfachen der genannten Zeitabstände entsprechen. Beispielsweise weist ein Polygonrad mit acht aneinandergrenzenden Umlenkflächen acht Übergangsphasen pro Umdrehung auf. Der Betrieb in der Charakterisierungsbetriebsart muss jedoch nicht zwingend beim Durchlaufen jeder dieser Übergangsphasen durchgeführt werden, sondern kann z.B. nur nach Ablauf einer vollen Umdrehung entsprechend jeder achten Übergangsphase oder nach einer halben Umdrehung, entsprechend jeder vierten Übergangsphase, durchgeführt werden.

Das periodische oder regelmäßige Betreiben der Ablenkvorrichtung in der Charakterisierungsbetriebsart kann insbesondere vorsehen, dass während des Betriebs der Ablenkvorrichtung der Wechsel zwischen der Regelbetriebsart und der Charakterisierungsbetriebsart in vorgegebener Weise erfolgt und hierfür keine Benutzerhandlung erforderlich ist. Dies schließt nicht aus, dass gegebenenfalls die Periodendauer bzw. der Zeitabstand zwischen zwei aufeinanderfolgenden Durchführungen der Charakterisierungsbetriebsart durch einen Benutzer variiert werden kann.

Sofern die Zeiträume, in denen sich die Ablenkvorrichtung außerhalb des Nutzbereichs bzw. innerhalb einer Übergangsphase für die Durchführung der Charakterisierungsbetriebsart befindet, zu kurz sind oder aus anderen Gründen ungeeignet sind, kann die Regelbetriebsart periodisch auch gezielt für die Durchführung der Charakterisierungsbetriebsart unterbrochen werden. Hierdurch entsteht allerdings zumeist eine gewisse Totzeit im Betrieb einer übergeordneten optoelektronischen Vorrichtung, in der keine oder nur eine eingeschränkte Überwachung möglich ist.

Gemäß einer weiteren bevorzugten Ausgestaltung wird in der Charakterisierungsbetriebsart ein Bewegungsablauf als Charakterisierungsbewegungsablauf verwendet, welcher für eine Umkehr der Bewegungsrichtung des Umlenkelements vorgesehen ist. Dies wurde vorstehend bereits im Zusammenhang mit der Verwendung von Schwingspiegeln als Umlenkelement erläutert.

Gemäß einer weiteren bevorzugten Ausgestaltung wird auf der Grundlage des zumindest einen Kinetikparameters das Auftreten einer Fehlfunktion der Ablenkvorrichtung geprüft. Dies kann beispielsweise durch einen Vergleich eines aktuellen ermittelten Werts des Kinetikparameters mit einem zu einem früheren Zeitpunkt ermittelten Wert erfolgen. Gegebenenfalls kann in einem Zwischenschritt eine Ermittlung oder Abschätzung eines physikalischen Systemparameters aus dem Kinetikparameter und dessen Analyse erfolgen. Unter einer Fehlfunktion wird beispielsweise das Auftreten einer Unwucht im System oder auftretende Brüche, beispielsweise einer Antriebs- oder Koppelachse, verstanden. So kann beispielsweise ein Bruch einer Antriebsachse zwischen dem Umlenkelement und der Antriebseinheit zu einer veränderten Massenträgheit des Systems führen.

Die vorliegende Erfindung betrifft in einem weiteren Aspekt eine optomechanische Ablenkvorrichtung zum periodischen Ablenken eines Sendelichtbündels zur Erzeugung eines Abtastmusters, insbesondere zum Durchführen des erfindungsgemäßen Verfahrens oder einer seiner bevorzugten Ausgestaltungen, umfassend
- ein rotatorisch versetzbares Umlenkelement, welches zum Umlenken des Sendelichtbündels eingerichtet ist,
- eine mit dem Umlenkelement gekoppelte Antriebseinheit, welche zum Antreiben des Umlenkelements eingerichtet ist, wobei die Antriebseinheit und das Umlenkelement ein dynamisches System bilden, dessen dynamische Eigenschaften durch zumindest einen Kinetikparameter charakterisiert sind,
- zumindest einen Sensor, welcher zum Erfassen zumindest eines Bewegungscharakteristikums des Umlenkelements eingerichtet ist, und
- eine Steuervorrichtung, welche zum Erzeugen von Steuersignalen für die Antriebseinheit eingerichtet ist, um die Ablenkvorrichtung abwechselnd in einer Regelbetriebsart oder in einer Charakterisierungsbetriebsart zu betreiben, wobei in der Regelbetriebsart die Steuersignale auf der Grundlage eines vorgegebenen kinetischen Sollbewegungsablaufs und des zumindest einen Kinetikparameters erzeugt werden, wobei in der Charakterisierungsbetriebsart die Steuersignale auf der Grundlage eines von dem Sollbewegungsablauf abweichenden Charakterisierungsbewegungsablaufs erzeugt und fortlaufend Messwerte für das zumindest eine Bewegungscharakteristikum des Umlenkelements von der Steuervorrichtung erfasst werden, wobei auf der Grundlage der erfassten Messwerte der zumindest eine Kinetikparameter ermittelt wird.

Die genannten Steuersignale können beispielsweise eine Betriebsspannung und/oder einen Betriebsstrom für einen Elektromotor der Antriebseinheit umfassen. Die Steuervorrichtung kann beispielsweise eine Regeleinheit umfassen, wobei die Regeleinheit dazu eingerichtet ist, die Steuersignale für die Antriebseinheit auf der Grundlage eines Modells zu erzeugen. Der Kinetikparameter kann ebenso wie die jeweiligen Bewegungsabläufe in der Steuereinrichtung bzw. der Regeleinheit gespeichert werden.

Weitere Vorteile des erfindungsgemäßen Verfahrens und der erfindungsgemäßen optomechanischen Ablenkeinrichtung ausgeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen. Insbesondere bilden bevorzugte Ausgestaltungen des erfindungsgemäßen Verfahrens auch bevorzugte Ausführungsformen der erfindungsgemäßen optomechanischen Ablenkvorrichtung.

Es zeigt:

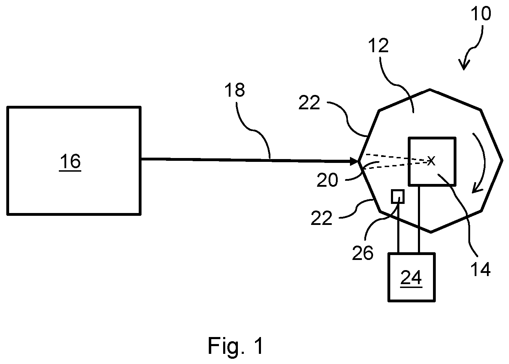

- Fig. 1: eine schematische Draufsicht auf eine optomechanische Ablenkvorrichtung gemäß einem Ausführungsbeispiel.

Fig. 1 zeigt eine optomechanische Ablenkvorrichtung 10 gemäß einem Ausführungsbeispiel, welche ein Umlenkelement 12 umfasst, das im Ausführungsbeispiel als Polygonspiegelrad 12 mit acht aneinander angrenzenden Spiegelflächen 22 ausgestaltet ist. Das Polygonspiegelrad 12 ist mechanisch mit einer Antriebseinheit 14 gekoppelt, welche dazu eingerichtet ist, das Polygonspiegelrad 12 mit gleichbleibendem Drehsinn rotierend anzutreiben. Die Antriebseinheit 14 und das Umlenkelement 12 bilden ein dynamisches System, dessen dynamische Eigenschaften durch zumindest einen Kinetikparameter charakterisiert sind.

Die Antriebseinheit 14 ist mit einer Steuervorrichtung 24 gekoppelt, welche Steuersignale in Form einer Betriebsspannung und/oder eines Betriebsstroms an die Antriebseinheit 14 übermittelt. Die Steuervorrichtung 24 kann eine Regeleinheit umfassen, welche dazu eingerichtet ist, die Steuersignale für die Antriebseinheit 14 auf der Grundlage eines Modells zu erzeugen. Die Steuervorrichtung 24 ist ferner mit einem Sensor 26 verbunden, welcher dazu eingerichtet ist, ein Bewegungscharakteristikum, beispielsweise eine Winkelposition oder eine Winkelgeschwindigkeit bzw. Drehzahl des Umlenkelements 12 zu ermitteln.

Die optomechanische Ablenkvorrichtung 10 kann Bestandteil einer übergeordneten optoelektronischen Vorrichtung sein, welche einen Lichtsender 16 zum Aussenden eines Sendelichtbündels 18 umfasst. Die Ablenkvorrichtung 10 kann im Zusammenwirken mit dem Lichtsender 16 und dem von diesem erzeugten Sendelichtbündel 18 ein Abtastmuster (nicht dargestellt) erzeugen, wobei hierfür das Sendelichtbündel 18 jeweils von einer der Spiegelflächen 22 umgelenkt wird. Das Sendelichtbündel 18 wird beim Auftreffen auf Grenzbereiche oder Stöße zwischen zwei benachbarten Spiegelflächen 22 nicht oder nur ein undefiniert umgelenkt.

Die Darstellung der optomechanischen Ablenkvorrichtung 10 in Fig. 1 ist stark vereinfacht. Um z.B. eine Abtastung einer Zeilenmatrix durchführen zu können, kann die optomechanische Ablenkvorrichtung 10 ggf. ein weiteres Umlenkelement, z.B. einen Schwing- oder Schwenkspiegel, umfassen, dessen Drehachse quer zu der Rotationsachse verläuft.

Die Steuervorrichtung 24 ist dazu eingerichtet, die Ablenkvorrichtung 10 abwechselnd in einer Regelbetriebsart oder in einer Charakterisierungsbetriebsart zu betreiben, wobei in der Regelbetriebsart die Steuersignale auf der Grundlage eines vorgegebenen kinetischen Sollbewegungsablauf und des zumindest einen Kinetikparameters erzeugt werden. In der Charakterisierungsbetriebsart werden die Steuersignale auf der Grundlage eines von dem Sollbewegungsablauf abweichenden Charakterisierungsbewegungsablauf erzeugt. Mittels des Sensors 26 werden fortlaufend Messwerte für das zumindest eine Bewegungscharakteristikum des Umlenkelements 12 von der Steuervorrichtung 24 erfasst, wobei auf der Grundlage der erfassten Messwerte der zumindest eine Kinetikparameter ermittelt wird.

Winkelstellungen des Polygonspiegelrads 12, in denen das Sendelichtbündel 18 vollständig auf eine der Spiegelflächen 22 trifft, definieren einen Nutzbereich des Abtastmusters. Trifft das Sendelichtbündel hingegen auf einen Grenzbereich zwischen zwei benachbarten Spiegelflächen 22, lenkt das Polygonspiegelrad 12 das Sendelichtbündel 18 in einen Bereich außerhalb dieses Nutzbereichs. Die Winkelstellung, bei welcher das Sendelichtbündel 18 auf den Grenzbereich zwischen zwei benachbarten Spiegelflächen 22 trifft, wird als Übergangsphase 20 bezeichnet.

Die Ablenkvorrichtung 10 wird in der Regelbetriebsart betrieben, wenn das Sendelichtbündel 18 von dem Polygonspiegelrad 12 in den Nutzbereich gelenkt wird. Befindet sich hingegen die Ablenkvorrichtung 10 in der Übergangsphase 20, wird die Ablenkvorrichtung 10 in der Charakterisierungsbetriebsart betrieben.

In der Regelbetriebsart dreht sich das Polygonspiegelrad 12 mit einer gleichbleibenden Geschwindigkeit. Wird der Beginn einer Übergangsphase 20 erreicht, wird das Polygonspiegelrad 12 mittels der Antriebseinheit 14 mit einer ruckartigen Bewegung kurzzeitig beschleunigt und kurz vor dem Erreichen des Endes der Übergangsphase 20 wieder auf die reguläre, d.h. die für die Regelbetriebsart vorgesehene Geschwindigkeit abgebremst. Grundsätzlich kann gemäß einer Abwandlung der Charakterisierungsbewegungsablauf auch eine umgekehrte Reihenfolge vorsehen, d.h. das Umlenkelement 12 wird zunächst abgebremst und dann wieder beschleunigt.

Das resultierende tatsächliche Bewegungsverhalten des Polygonspiegelrads 12 wird mittels des Sensors 26 erfasst und von der Steuervorrichtung 24 ausgewertet, um daraus das zumindest eine Bewegungscharakteristikum zu ermitteln. Durch eine geeignete Auswertung, beispielsweise durch einen Vergleich des Bewegungscharakteristikums mit dem vorgegebenen Charakterisierungsbewegungsablauf, kann der zumindest eine Kinetikparameter ermittelt werden. Dieser Kinetikparameter wird in der Steuervorrichtung 24 während der Regelbetriebsart zusammen mit dem vorgegebenen kinetischen Sollbewegungsablauf verwendet, um die Steuersignale für die Antriebseinheit 14 zu erzeugen.

Gemäß einer nicht dargestellten Abwandlung kann ein Schwingspiegel anstelle des Polygonspiegelrads 12 als Umlenkelement verwendet werden. Die Bewegung des Schwingspiegels erfolgt üblicherweise mit einem periodisch wechselnden Drehsinn, wobei nur ein bestimmter Winkelbereich überstrichen wird. Eine Übergangsphase, in denen die Charakterisierungsbetriebsart durchgeführt wird, befindet sich in Winkelbereichen, in denen eine Umkehr der Bewegungsrichtung des Schwingspiegels erfolgt. Die Übergangsphase kann auch hier Brems- und Beschleunigungsphasen umfassen. Wenn sich der Schwingspiegel in dieser Übergangsphase befindet, wird das Sendelichtbündel in Bereiche außerhalb des Nutzbereichs des durch die Ablenkvorrichtung 10 erzeugten Abtastmusters gelenkt und ggf. dunkel getastet.

### Bezugszeichenliste

- 10: Ablenkvorrichtung
- 12: Umlenkelement, Polygonspiegelrad
- 14: Antriebseinheit
- 16: Lichtsender
- 18: Sendelichtbündel
- 20: Übergangsphase
- 22: Spiegelfläche
- 24: Steuervorrichtung
- 26: Sensor

## Patentansprüche

1. Verfahren zum Betreiben einer optomechanischen Ablenkvorrichtung (10), welche zum periodischen Ablenken eines Sendelichtbündels (18) zur Erzeugung eines Abtastmusters eingerichtet ist und ein rotatorisch versetzbares Umlenkelement (12) umfasst,
wobei das Umlenkelement (12) von einer Antriebseinheit (14) angetrieben wird, wobei die Antriebseinheit (14) und das Umlenkelement (12) ein dynamisches System bilden, dessen dynamische Eigenschaften durch zumindest einen Kinetikparameter charakterisiert sind,
wobei die Ablenkvorrichtung (10) abwechselnd in einer Regelbetriebsart oder in einer Charakterisierungsbetriebsart betrieben wird,
wobei in der Regelbetriebsart die Antriebseinheit (14) auf der Grundlage eines vorgegebenen kinetischen Sollbewegungsablaufs und des zumindest einen Kinetikparameters betrieben wird,
wobei die Antriebseinheit (14) in der Charakterisierungsbetriebsart auf der Grundlage eines von dem Sollbewegungsablauf abweichenden Charakterisierungsbewegungsablaufs betrieben wird und fortlaufend Messwerte für zumindest ein Bewegungscharakteristikum des Umlenkelements (12) erfasst werden, wobei auf der Grundlage dieser erfassten Messwerte der zumindest eine Kinetikparameter ermittelt wird.

2. Verfahren nach Anspruch 1,
**dadurch gekennzeichnet,**
**dass** das zumindest eine Bewegungscharakteristikum aus einer Gruppe ausgewählt ist, welche die Position, die Geschwindigkeit, die Beschleunigung oder den Ruck der Rotationsbewegung des Umlenkelements (12) umfasst.

3. Verfahren nach Anspruch 1 oder 2,
**dadurch gekennzeichnet,**
**dass** die Antriebseinheit (14) in der Charakterisierungsbetriebsart derart betrieben wird, dass das Umlenkelement (12) im Vergleich zu der Regelbetriebsart mit einer abweichenden Geschwindigkeit, einer abweichenden Beschleunigung

4. Verfahren nach einem der vorhergehenden Ansprüche,
**dadurch gekennzeichnet,**
**dass** das Abtastmuster zumindest einen Nutzbereich umfasst, wobei die Ablenkvorrichtung (10) nur dann in der Charakterisierungsbetriebsart betrieben wird, wenn das Umlenkelement (12) das Sendelichtbündel (18) in einen Bereich außerhalb des Nutzbereichs lenkt.

5. Verfahren nach einem der vorhergehenden Ansprüche,
**dadurch gekennzeichnet,**
**dass** die Ablenkvorrichtung (10) in der Charakterisierungsbetriebsart betrieben wird, während sich das Umlenkelement (12) in einer Übergangsphase befindet, wobei die Übergangsphase des Umlenkelements (12) einem jeweiligen Winkelstellungsbereich entspricht, in welchem keine oder zumindest keine geometrisch eindeutig definierte Umlenkung des Sendelichtbündels (18) erfolgt.

6. Verfahren nach einem der vorhergehenden Ansprüche,
**dadurch gekennzeichnet,**
**dass** die Ablenkvorrichtung (10) periodisch in der Charakterisierungsbetriebsart betrieben wird.

7. Verfahren nach einem der vorhergehenden Ansprüche,
**dadurch gekennzeichnet,**
**dass** in der Charakterisierungsbetriebsart ein Bewegungsablauf als Charakterisierungsbewegungsablauf verwendet wird, welcher für eine Umkehr der Bewegungsrichtung des Umlenkelements (12) vorgesehen ist.

8. Verfahren nach einem der vorhergehenden Ansprüche,
**dadurch gekennzeichnet,**
**dass** auf der Grundlage des zumindest einen Kinetikparameters das Auftreten einer Fehlfunktion der Ablenkvorrichtung (10) geprüft wird.

9. Optomechanische Ablenkvorrichtung (10) zum periodischen Ablenken eines Sendelichtbündels (18) zur Erzeugung eines Abtastmusters, insbesondere zum Durchführen eines Verfahrens gemäß den vorhergehenden Ansprüchen, umfassend
ein rotatorisch versetzbares Umlenkelement (12), welches zum Umlenken des Sendelichtbündels (18) eingerichtet ist,
eine mit dem Umlenkelement (12) gekoppelte Antriebseinheit (14), welche zum Antreiben des Umlenkelements (12) eingerichtet ist, wobei die Antriebseinheit (14) und das Umlenkelement (12) ein dynamisches System bilden, dessen dynamische Eigenschaften durch zumindest einen Kinetikparameter charakterisiert sind,
zumindest einen Sensor (26), welcher zum Erfassen zumindest eines Bewegungscharakteristikums des Umlenkelements (12) eingerichtet ist, und eine Steuervorrichtung (24), welche zum Erzeugen von Steuersignalen für die Antriebseinheit (14) eingerichtet ist, um die Ablenkvorrichtung (10) abwechselnd in einer Regelbetriebsart oder in einer Charakterisierungsbetriebsart zu betreiben,
wobei in der Regelbetriebsart die Steuersignale auf der Grundlage eines vorgegebenen kinetischen Sollbewegungsablaufs und des zumindest einen Kinetikparameters erzeugt werden,
wobei in der Charakterisierungsbetriebsart die Steuersignale auf der Grundlage eines von dem Sollbewegungsablauf abweichenden Charakterisierungsbewegungsablaufs erzeugt und fortlaufend Messwerte für das zumindest eine Bewegungscharakteristikum des Umlenkelements (12) von der Steuervorrichtung (24) erfasst werden, wobei auf der Grundlage der erfassten Messwerte der zumindest eine Kinetikparameter ermittelt wird.

## Geänderte Patentansprüche

### Geänderte Patentansprüche gemäss Regel 137(2) EPÜ.

1. Verfahren zum Betreiben einer optomechanischen Ablenkvorrichtung (10), welche zum periodischen Ablenken eines Sendelichtbündels (18) zur Erzeugung eines Abtastmusters eingerichtet ist und ein rotatorisch versetzbares Umlenkelement (12) umfasst,
wobei das Umlenkelement (12) von einer Antriebseinheit (14) angetrieben wird, wobei die Antriebseinheit (14) und das Umlenkelement (12) ein dynamisches System bilden, dessen dynamische Eigenschaften durch zumindest einen Kinetikparameter charakterisiert sind,
wobei die Ablenkvorrichtung (10) abwechselnd in einer Regelbetriebsart oder in einer Charakterisierungsbetriebsart betrieben wird,
wobei in der Regelbetriebsart die Antriebseinheit (14) auf der Grundlage eines vorgegebenen kinetischen Sollbewegungsablaufs und des zumindest einen Kinetikparameters betrieben wird,
wobei die Antriebseinheit (14) in der Charakterisierungsbetriebsart auf der Grundlage eines von dem Sollbewegungsablauf abweichenden Charakterisierungsbewegungsablaufs betrieben wird und fortlaufend Messwerte für zumindest ein Bewegungscharakteristikum des Umlenkelements (12) erfasst werden, wobei auf der Grundlage dieser erfassten Messwerte der zumindest eine Kinetikparameter ermittelt wird.

2. Verfahren nach Anspruch 1,
**dadurch gekennzeichnet,**
**dass** das zumindest eine Bewegungscharakteristikum aus einer Gruppe ausgewählt ist, welche die Position, die Geschwindigkeit, die Beschleunigung oder den Ruck der Rotationsbewegung des Umlenkelements (12) umfasst.

3. Verfahren nach Anspruch 1 oder 2,
**dadurch gekennzeichnet,**
**dass** die Antriebseinheit (14) in der Charakterisierungsbetriebsart derart betrieben wird, dass das Umlenkelement (12) im Vergleich zu der Regelbetriebsart mit einer abweichenden Geschwindigkeit, einer abweichenden Beschleunigung und/oder einem abweichenden Ruck angetrieben wird.

4. Verfahren nach einem der vorhergehenden Ansprüche,
**dadurch gekennzeichnet,**
**dass** das Abtastmuster zumindest einen Nutzbereich umfasst, wobei die Ablenkvorrichtung (10) nur dann in der Charakterisierungsbetriebsart betrieben wird, wenn das Umlenkelement (12) das Sendelichtbündel (18) in einen Bereich außerhalb des Nutzbereichs lenkt.

5. Verfahren nach einem der vorhergehenden Ansprüche,
**dadurch gekennzeichnet,**
**dass** die Ablenkvorrichtung (10) in der Charakterisierungsbetriebsart betrieben wird, während sich das Umlenkelement (12) in einer Übergangsphase befindet, wobei die Übergangsphase des Umlenkelements (12) einem jeweiligen Winkelstellungsbereich entspricht, in welchem keine oder zumindest keine geometrisch eindeutig definierte Umlenkung des Sendelichtbündels (18) erfolgt.

6. Verfahren nach einem der vorhergehenden Ansprüche,
**dadurch gekennzeichnet,**
**dass** die Ablenkvorrichtung (10) periodisch in der Charakterisierungsbetriebsart betrieben wird.

7. Verfahren nach einem der vorhergehenden Ansprüche,
**dadurch gekennzeichnet,**
**dass** in der Charakterisierungsbetriebsart ein Bewegungsablauf als Charakterisierungsbewegungsablauf verwendet wird, welcher für eine Umkehr der Bewegungsrichtung des Umlenkelements (12) vorgesehen ist.

8. Verfahren nach einem der vorhergehenden Ansprüche,
**dadurch gekennzeichnet,**
**dass** auf der Grundlage des zumindest einen Kinetikparameters das Auftreten einer Fehlfunktion der Ablenkvorrichtung (10) geprüft wird.

9. Optomechanische Ablenkvorrichtung (10) zum periodischen Ablenken eines Sendelichtbündels (18) zur Erzeugung eines Abtastmusters, insbesondere zum Durchführen eines Verfahrens gemäß den vorhergehenden Ansprüchen, umfassend
ein rotatorisch versetzbares Umlenkelement (12), welches zum Umlenken des Sendelichtbündels (18) eingerichtet ist,
eine mit dem Umlenkelement (12) gekoppelte Antriebseinheit (14), welche zum Antreiben des Umlenkelements (12) eingerichtet ist, wobei die Antriebseinheit (14) und das Umlenkelement (12) ein dynamisches System bilden, dessen dynamische Eigenschaften durch zumindest einen Kinetikparameter charakterisiert sind,
zumindest einen Sensor (26), welcher zum Erfassen zumindest eines Bewegungscharakteristikums des Umlenkelements (12) eingerichtet ist, und eine Steuervorrichtung (24), welche zum Erzeugen von Steuersignalen für die Antriebseinheit (14) eingerichtet ist, um die Ablenkvorrichtung (10) abwechselnd in einer Regelbetriebsart oder in einer Charakterisierungsbetriebsart zu betreiben,
wobei in der Regelbetriebsart die Steuersignale auf der Grundlage eines vorgegebenen kinetischen Sollbewegungsablaufs und des zumindest einen Kinetikparameters erzeugt werden,
wobei in der Charakterisierungsbetriebsart die Steuersignale auf der Grundlage eines von dem Sollbewegungsablauf abweichenden Charakterisierungsbewegungsablaufs erzeugt und fortlaufend Messwerte für das zumindest eine Bewegungscharakteristikum des Umlenkelements (12) von der Steuervorrichtung (24) erfasst werden, wobei auf der Grundlage der erfassten Messwerte der zumindest eine Kinetikparameter ermittelt wird.

## Geänderte Patentansprüche

### Geänderte Patentansprüche gemäss Regel 137(2) EPÜ.

1. Verfahren zum Betreiben einer optomechanischen Ablenkvorrichtung (10), welche zum periodischen Ablenken eines Sendelichtbündels (18) zur Erzeugung eines Abtastmusters eingerichtet ist und ein rotatorisch versetzbares Umlenkelement (12) umfasst,
wobei das Umlenkelement (12) von einer Antriebseinheit (14) angetrieben wird, wobei die Antriebseinheit (14) und das Umlenkelement (12) ein dynamisches System bilden, dessen dynamische Eigenschaften durch zumindest einen Kinetikparameter charakterisiert sind,
wobei die Ablenkvorrichtung (10) abwechselnd in einer Regelbetriebsart oder in einer Charakterisierungsbetriebsart betrieben wird,
wobei in der Regelbetriebsart die Antriebseinheit (14) auf der Grundlage eines vorgegebenen kinetischen Sollbewegungsablaufs und des zumindest einen Kinetikparameters betrieben wird,
wobei die Antriebseinheit (14) in der Charakterisierungsbetriebsart auf der Grundlage eines von dem Sollbewegungsablauf abweichenden Charakterisierungsbewegungsablaufs betrieben wird und fortlaufend Messwerte für zumindest ein Bewegungscharakteristikum des Umlenkelements (12) erfasst werden, wobei auf der Grundlage dieser erfassten Messwerte der zumindest eine Kinetikparameter ermittelt wird.

2. Verfahren nach Anspruch 1,
**dadurch gekennzeichnet,**
**dass** das zumindest eine Bewegungscharakteristikum aus einer Gruppe ausgewählt ist, welche die Position, die Geschwindigkeit, die Beschleunigung oder den Ruck der Rotationsbewegung des Umlenkelements (12) umfasst.

3. Verfahren nach Anspruch 1 oder 2,
**dadurch gekennzeichnet,**
**dass** die Antriebseinheit (14) in der Charakterisierungsbetriebsart derart betrieben wird, dass das Umlenkelement (12) im Vergleich zu der Regelbetriebsart mit einer abweichenden Geschwindigkeit, einer abweichenden Beschleunigung und/oder einem abweichenden Ruck angetrieben wird.

4. Verfahren nach einem der vorhergehenden Ansprüche,
**dadurch gekennzeichnet,**
**dass** das Abtastmuster zumindest einen Nutzbereich umfasst, wobei die Ablenkvorrichtung (10) nur dann in der Charakterisierungsbetriebsart betrieben wird, wenn das Umlenkelement (12) das Sendelichtbündel (18) in einen Bereich außerhalb des Nutzbereichs lenkt.

5. Verfahren nach einem der vorhergehenden Ansprüche,
**dadurch gekennzeichnet,**
**dass** die Ablenkvorrichtung (10) in der Charakterisierungsbetriebsart betrieben wird, während sich das Umlenkelement (12) in einer Übergangsphase befindet, wobei die Übergangsphase des Umlenkelements (12) einem jeweiligen Winkelstellungsbereich entspricht, in welchem keine oder zumindest keine geometrisch eindeutig definierte Umlenkung des Sendelichtbündels (18) erfolgt.

6. Verfahren nach einem der vorhergehenden Ansprüche,
**dadurch gekennzeichnet,**
**dass** die Ablenkvorrichtung (10) periodisch in der Charakterisierungsbetriebsart betrieben wird.

7. Verfahren nach einem der vorhergehenden Ansprüche,
**dadurch gekennzeichnet,**
**dass** in der Charakterisierungsbetriebsart ein Bewegungsablauf als Charakterisierungsbewegungsablauf verwendet wird, welcher für eine Umkehr der Bewegungsrichtung des Umlenkelements (12) vorgesehen ist.

8. Verfahren nach einem der vorhergehenden Ansprüche,
**dadurch gekennzeichnet,**
**dass** auf der Grundlage des zumindest einen Kinetikparameters das Auftreten einer Fehlfunktion der Ablenkvorrichtung (10) geprüft wird.

9. Optomechanische Ablenkvorrichtung (10) zum periodischen Ablenken eines Sendelichtbündels (18) zur Erzeugung eines Abtastmusters, insbesondere zum Durchführen eines Verfahrens gemäß den vorhergehenden Ansprüchen, umfassend
ein rotatorisch versetzbares Umlenkelement (12), welches zum Umlenken des Sendelichtbündels (18) eingerichtet ist,
eine mit dem Umlenkelement (12) gekoppelte Antriebseinheit (14), welche zum Antreiben des Umlenkelements (12) eingerichtet ist, wobei die Antriebseinheit (14) und das Umlenkelement (12) ein dynamisches System bilden, dessen dynamische Eigenschaften durch zumindest einen Kinetikparameter charakterisiert sind,
zumindest einen Sensor (26), welcher zum Erfassen zumindest eines Bewegungscharakteristikums des Umlenkelements (12) eingerichtet ist, und eine Steuervorrichtung (24), welche zum Erzeugen von Steuersignalen für die Antriebseinheit (14) eingerichtet ist, um die Ablenkvorrichtung (10) abwechselnd in einer Regelbetriebsart oder in einer Charakterisierungsbetriebsart zu betreiben,
wobei in der Regelbetriebsart die Steuersignale auf der Grundlage eines vorgegebenen kinetischen Sollbewegungsablaufs und des zumindest einen Kinetikparameters erzeugt werden,
wobei in der Charakterisierungsbetriebsart die Steuersignale auf der Grundlage eines von dem Sollbewegungsablauf abweichenden Charakterisierungsbewegungsablaufs erzeugt und fortlaufend Messwerte für das zumindest eine Bewegungscharakteristikum des Umlenkelements (12) von der Steuervorrichtung (24) erfasst werden, wobei auf der Grundlage der erfassten Messwerte der zumindest eine Kinetikparameter ermittelt wird.
